# EUROPÄISCHE PATENTSCHRIFT

(11) **EP 0 856 454 B1**
(45) Veröffentlichungstag und Bekanntmachung des Hinweises auf die Patenterteilung: **27.10.2004**
(21) Anmeldenummer: 97122377.1
(22) Anmeldetag: 18.12.1997
(51) Int. Cl.: B62D 21/09, B62D 21/11

(54) **Vorrichtung zur Festlegung eines Funktionsteiles einer Rohbaukarosserie eines Kraftfahrzeugs**
Device for fixing a functional part of a self-supporting shell structure for a motor vehicle
Dispositif pour la fixation d'une partie fonctionelle à une structure de carrosserie autoporteuse d'un véhicule automobile

(30) Priorität: 31.01.1997 DE 19703520
(43) Veröffentlichungstag der Anmeldung: 05.08.1998
(73) Patentinhaber: DaimlerChrysler AG, 70567 Stuttgart (DE)
(72) Erfinder: Biesinger, Ursula, 71154 Nufringen (DE); Schray, Bernd, 71134 Aidlingen (DE); Schulz, Manfred, 72218 Wildberg (DE)

(56) Entgegenhaltungen:
- EP-A- 0 708 014
- DE-A- 4 343 642
- DE-B- 2 926 216
- US-A- 5 409 289

## Beschreibung

Die Erfindung betrifft eine Vorrichtung zur Festlegung eines Funktionsteiles an einer Befestigungsstelle einer Rohbaukarosserie eines Kraftfahrzeugs, nach dem Oberbegriff des Anspruchs 1.

Eine solche Vorrichtung ist aus der US 540 9289 A bekannt.

Eine ander Vorrichtung ist aus der DE 195 33 138 C1 bekannt. Diese Vorrichtung weist als rohbauseitigen Schraubteil eine Gewindemutter auf, die schwimmend in einem fest mit der Rohbaukarosserie verbundenen Käfig gehalten ist. Im unverschraubten Zustand ist die Gewindemutter mittels eines Halters in radialem Abstand zu dem Käfig und in axialem Abstand zu der Durchtrittsöffnung in dem Käfig positioniert.

Es ist auch bekannt (DE 43 43 642 A1), ein Profil einer Rohbaukarosserie in gegenüberliegenden Profilwänden mit Ausnehmungen zu versehen, in die ein brückenartiger Sockel mit einer Einsteckmutter eingeschoben werden kann. Im vollständig eingeschobenen Zustand greift eine Nase des Sockels für die Einsteckmutter in eine rückseitige Ausnehmung, so daß eine sichere Positionierung der Einsteckmutter in dem Profil gewährleistet ist.

Die DE 43 21 922 A1 offenbart einen Kraftfahrzeugrohbau, an dem Muttern durch Schweißverbindungen gehalten sind. Dazu ist ein rohbauseitig festgelegter Käfig vorgesehen, in den von einer Seite her ein Sockel einer Gewindemutter einschiebbar ist, die im eingeschobenen Zustand mit einem ein Innengewinde aufweisenden zylindrischen Teil aus dem Käfig herausragt.

Weitere bekannte Vorrichtungen (Mercedes-Benz Personenkraftwagen) dienen zur Festlegung von Achsen, Gelenkwellen, Getrieben oder anderen Aggregaten des Kraftfahrzeugs an der Rohbaukarosserie oder auch zur Befestigung von nicht rohbauseitig verschweißten Längsträgern, Querträgern, Konsolen, Haltern oder ähnlichem an entsprechenden Befestigungsstellen der Rohbaukarosserie des Kraftfahrzeugs. Die bekannten Befestigungsvorrichtungen weisen als rohbauseitige Schraubteile, an denen die festzulegenden Funktionsteile, wie sie oben genannt sind, mit Hilfe korrespondierender, funktionsseitiger Schraubteile festlegbar sind, Gewendeplatten auf, die durch geeignete Schweißnähte an der Befestigungsstelle mit der Rohbaukarosserie verschweißt werden. Falls die Schweißnähte durch Roboter automatisch angebracht werden, kann es vorkommen, daß die Gewindeplatte nicht an der Stelle positioniert ist, an der der Roboter eine entsprechende Schweißnaht anbringt. Zur Sicherstellung einer in jedem Falle ausreichenden Quälität und Festigkeit der Schweißung war daher eine Kontrolle sämtlicher Werkstücke erforderlich. Wurde dabei im Einzelfall eine nur unzureichende Verschweißung der Gewindeplatte mit der Rohbaukarosserie festestellt, so mußte diese Karosserie in eine Nacharbeit genommen und die Schweißung manuell angebracht werden. Nachteilig ist hierbei also trotz der Mechanisierung ein hoher Prüfaufwand und Nacharbeit.

Aufgabe der Erfindung ist es, eine Vorrichtung der eingangs genannten Art zu schaffen, die eine sichere, und einfachere Festlegung eines Funktionsteiles an der Befestigungsstelle der Rohbaukarosserie unabhängig davon gewährleistet, ob eine automatische oder eine manuelle Montage des Funktionsteiles vorgenommen wird.

Diese Aufgabe wird durch die Merkmale des Kennzeichenteils des Anspruchs 1 gelöst. Ein Blechteil ist zum Einsetzen in die Aufnahme an die Abmessungen der Aufnahme angepaßt und mittels einer Rastverbindung in der Aufnahme festlegbar, wobei wenigstens zwei Raststellen an zueinander beabstandeten Wandungen der Aufnahme und wenigstens zwei korrespondierende Rastelementen an korrespondierenden Trägerabschnitten des Blechteils vorgesehen sind. Die Aufnahme ist vorzugsweise in Wannenform, als U-förmiger Hohlträger, als entsprechende Konsole oder dergleichen gestaltet. Durch die erfindungsgemäße Lösung werden Verschweißungen oder ähnliche Verbindungen zwischen dem rohbauseitigen Schraubteil und der Befestigungsstelle der Rohbaukarosserie vermieden. Der rohbauseitige Schraubteil wird vielmehr mittels eines Blechteils in einfacher Weise durch eine Rastverbindung an der Rohbaukarosserie festgelegt. Dadurch, daß der rohbauseitige Schraubteil einschließlich des Blechteils in die Aufnahme eingesetzt wird, wird eine sichere Halterung des rohbauseitigen Schraubteiles auch dann erzielt, wenn die Rastverbindung ihre endgültige Rastposition nicht erreicht hat, da die Wandungen der Aufnahme das Blechteil einschließlich des rohbauseitigen Schraubteiles sichern. Die Raststellen und die Rastelemente können jeweils als Aussparungen oder als in die Aussparungen eingreifende Rasthaken, Rastzungen, Rastnasen oder ähnliches ausgestaltet sein.

In Ausgestaltung der Erfindung ist der rohbauseitige Schraubteil als mit einem Gewindedurchzug versehene Gewindeplatte gestaltet, die mit - auf die Schraubachse bezogen - radialem Spiel in dem Blechteil gehalten ist, wobei der Durchbruch in der Aufnahme in seiner Dimensionierung an das maximale radiale Spiel der Gewindeplatte angepaßt ist. Durch diese Ausgestaltung ist es möglich, Positionstoleranzen des funktionsseitigen Schraubteiles auszugleichen, da der rohbauseitige Schraubteil in Form der Gewindeplatte in einfacher Weise durch radiale Verschiebung an die Position des funktionsseitigen Schraubteiles angepaßt wird.

In weiterer Ausgestaltung der Erfindung ragt ein Gewindedurchzug der Gewindeplatte durch den Durchbruch in der Aufnahme hindurch. Dadurch wird die Festlegung des funktionsseitigen Schraubteiles vereinfacht, da die Positionierung der Gewindeplatte und des Gewindedurchzuges von der gegenüberliegenden Seite erkennbar ist, an der das entsprechende Funktionsteil festgelegt wird.

Das Blechteil ist als einstückiges Blechteil gestaltet, das Haltelaschen zur Halterung der Gewindeplatte und als Rastelemente dienende Rastzungen zur Festlegung des Blechteils in als korrespondierende Raststellen dienenden Rastaussparungen der Aufnahme aufweist. Dies ist eine besonders einfache und kostengünstig herstellbare Ausgestaltung des Blechteils, wobei das Blechteil und die Gewindeplatte durch ein entsprechendes Umbiegen der Haltelaschen in einfacher Weise zu einer vormontierten Baueinheit zusammenfügbar sind.

In weiterer Ausgestaltung der Erfindung ist die Aufnahme einstückiger Teil der Rohbaukarosserie. Dadurch ist die Aufnahme in die Rohbaukarosserie integriert, so daß keine zusätzlichen Arbeitsschritte zur nachträglichen Festlegung der Aufnahme an der Rohbaukarosserie notwendig sind.

In weiterer Ausgestaltung der Erfindung weise das Blechteil Anschlagzungen zur Begrenzung der radialen Spielfreiheit der Gewindeplatte auf. Die Positionierung dieser Anschlagzungen ist zweckmäßig an den maximalen Toleranzausgleich der Gewindeplatte angepaßt.

In weiterer Ausgestaltung der Erfindung ist die Rastverbindung lösbar gestaltet. Dadurch kann in einfacher Weise ein Austausch der rohbauseitigen Schraubteile vorgenommen werden.

Weitere Vorteile und Merkmale der Erfindung ergeben sich aus den Unteransprüchen. Nachfolgend wird ein bevorzugtes Ausführungsbeispiel der Erfindung beschrieben und anhand der Zeichnungen dargestellt.
- Fig. 1: zeigt einen Ausschnitt einer Rohbaukarosserie eines Personenkraftwagens im Bereich einer Hinterachse, wobei die Hinterachse mit einer Ausführungsform einer erfindungsgemäßen Vorrichtung zur Festlegung an der Rohbaukarosserie versehen ist,

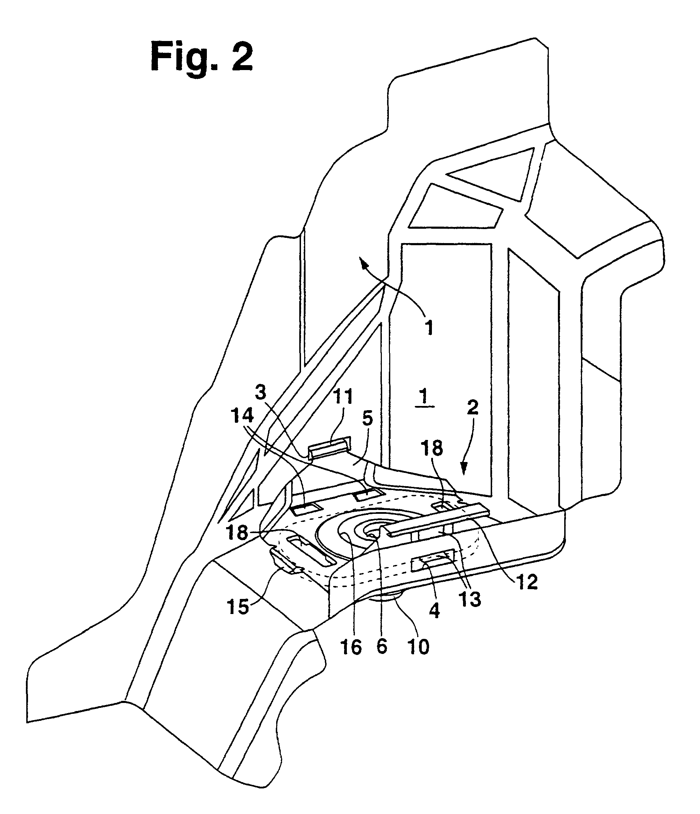

- Fig. 2: in perspektivischer Darstellung die Befestigungsstelle der Rohbaukarosserie nach Fig. 1,

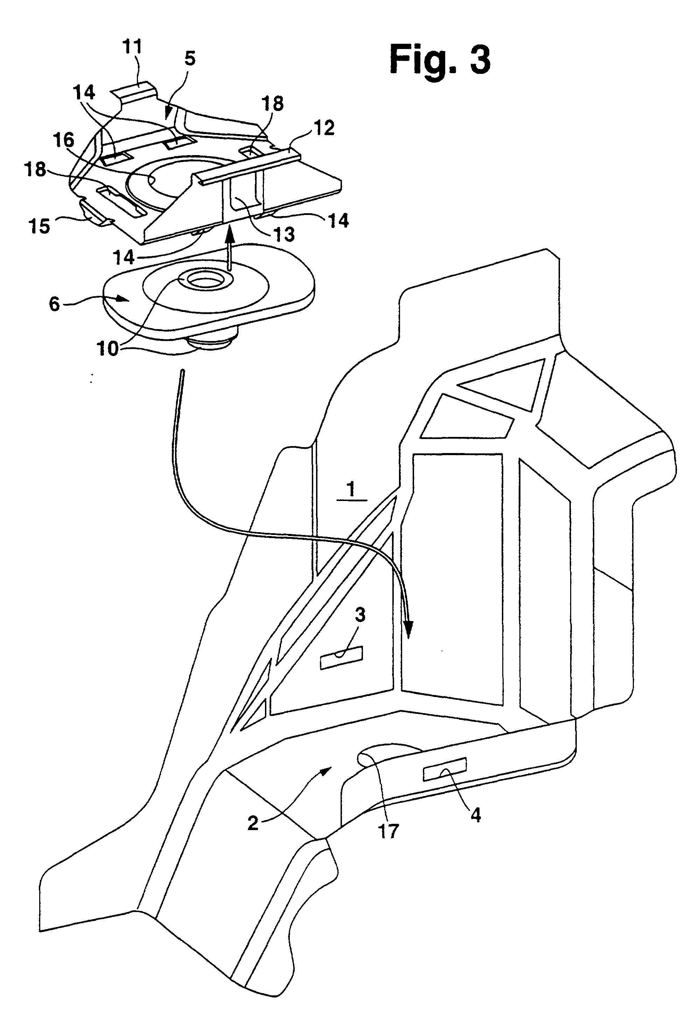

- Fig. 3: die Befestigungsstelle nach Fig. 2 in einer perspektivischen Explosionsdarstellung, und
- Fig. 4: schematisch in vergrößerter Darstellung einen Schnitt durch die Befestigungsstelle ähnlich Fig 1.

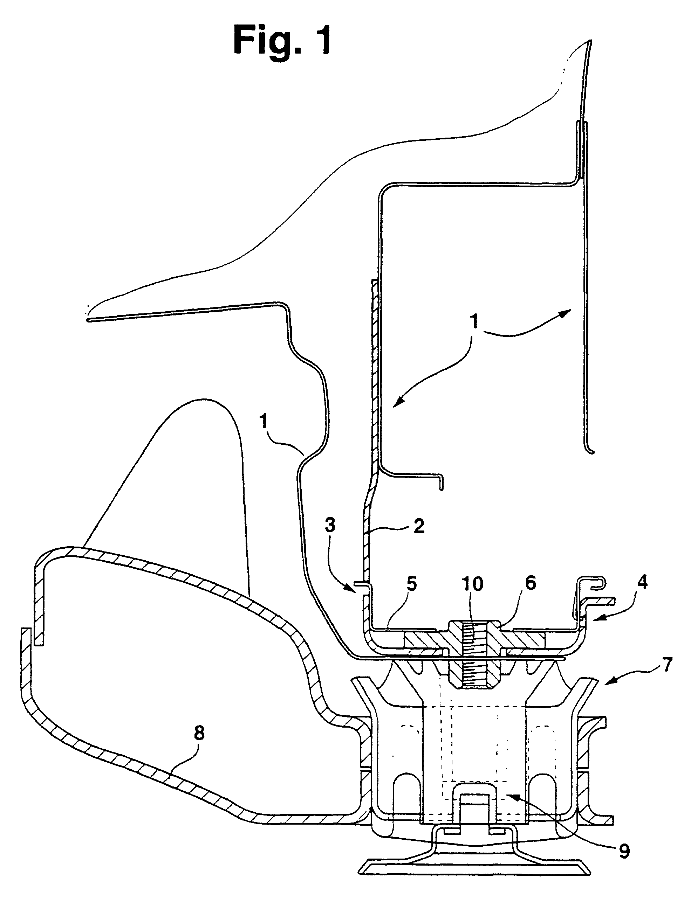

Eine Rohbaukarosserie 1 für einen Personenkraftwagen weist in seinem hinteren Bereich eine Hinterachse 8 auf, die an mehreren Befestigungsstellen mit Hilfe jeweils eines Lagers 7 an der Rohbaukarosserie 1 festgelegt ist. Die Festlegung erfolgt an jeder Befestigungsstelle mittels einer erfindungsgemäßen Vorrichtung, wobei eine solche erfindungsgemäße Vorrichtung auch zur Festlegung anderer Funktionsteile wie anderer Aggregate oder anderer Trägerteile dienen kann. In Fig. 1 ist eine vordere seitliche Befestigungsstelle für die Hinterachse 8 dargestellt. Die gegenüberliegende seitliche Befestigungsstelle für die Hinterachse 8 ist in identischer Weise gestaltet. Die Anbindung der Hinterachse 8 an die Rohbaukarosserie 1 erfolgt im Bereich einer gegenüber den übrigen Blechteilen der Rohbaukarosserie stärkerwandigen Aufnahme 2, die zwischen eine hintere Bodenverstärkung und einen hinteren Längsträgerteil der Rchbaukarosserie 1 eingebettet ist. Die Aufnahme 2 ist wannenartig gestaltet und weist auf zwei gegenüberliegenden Seiten jeweils einen vertikalen Wandungsabschnitt auf, in denen jeweils eine rechteckige Aussparung 3, 4 vorgesehen ist. Ein etwa horizontal und eben verlaufender Boden der Aufnahme 2 ist mit einem kreisförmigen Durchbruch versehen, der die Aufnahme 2 nach unten hin für die Anbindung der Hinterachse 8 öffnet.

Das Lager 7 der Hinterachse 8 wird mittels eine Schraubelementes 9 mit einem korrespondierenden, nachfolgend näher beschriebenen Schraubteil 6, 10 in der Aufnahme 2 verschraubt und so an der Unterseite der Aufnahme 2 und der Rohbaukarosserie 1 festgelegt. Dazu ist in der Aufnahme 2 eine Gewindeplatte 6 angeordnet, die aus einer ungefähr ebenen, ovalähnlichen Platte und einem einstückig angeformten, rechtwinklig von der Platte 6 abragenden Gewindedurchzug 10 aufgebaut ist. Der Gewindedurchzug 10 ragt durch den Durchbruch 17 im montierten Zustand der Gewindeplatte 6, 10 nach unten hin durch.

Die Gewindeplatte 6, 10 ist in der Aufnahme 2 mittels eines Blechteils 5 gehalten, der als einstückiges Blechteil hergestellt ist und einen ebenen Plattenabschnitt aufweist, der auf der Oberseite der Gewindeplatte 6, 10 aufliegt. In dem Blechteil 5 ist ein kreisrunder Durchbruch 16 vorgesehen, dessen Durchmesser größer ist als der Durchmesser eines nach oben abragenden Sockels des Gewindedurchzugs 10. Auch der Durchbruch 17 in der Aufnahme 2 ist in seinem Durchmesser größer als der Außendurchmesser des Gewindedurchzugs 10.

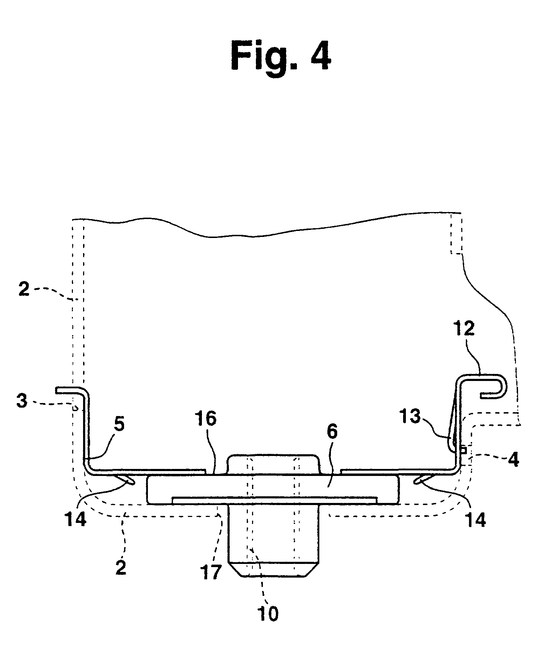

Die gegenüberliegenden, abgerundeten Stirnseiten der Gewindeplatte 6, 10 sind mit Hilfe von Haltelaschen 15 an der Unterseite des Plattenabschnittes des Blechteils 5 gehalten. Dabei sind vertikal nach unten abragende Stege jeder Haltelasche 15 in Abstand zu den Rändern der Stirnseiten der Gewindeplatte 6, 10 angeordnet, so daß die Gewindeplatte 6, 10 in Richtung der Haltelaschen 15 mit radialem Spiel verschiebbar ist. An den gegenüberliegenden Seiten der Gewindeplatte 6 sind aus dem Plattenabschnitt des Blechteils 5 jeweils zwei zungenförmige Anschlagstege 14 schräg nach unten herausgedrückt (Fig. 4), deren freie Stirnränder ebenfalls in Abstand zu den korrespondierenden Seitenrändern der Gewindeplatte 6, 10 angeordnet sind. Dadurch kann die Gewindeplatte 6, 10 auch in Richtung dieser Anschlagstege 14 mit einer gewissen Spielfreiheit radial bewegt werden. Um eine sichere Anlage der Oberseite der Gewindeplatte 6, 10 an der Unterseite des Plattenabschnittes des Blechteils 5 zu gewährleisten, weist der Plattenabschnitt des Blechteils 5 - jeweils zu den Haltelaschen 15 benachbart - zwei Versteifungsrippen 18 auf, die nach unten einstückig aus dem Plattenabschnitt herausgedrückt sind und so linienförmige Anlagebereiche für die Oberseite der Gewindeplatte 6, 10 bilden.

Die Gewindeclatte 6, 10 wird durch die Haltelaschen 15 derart an dem Blechteil 5 gehalten, daß die Gewindeplatte 6, 10 zwar mit gewissem radialen Spiel beweglich ist, daß sie jedoch axial - auf die Schraubachse des Gewindedurchzuges 10 bezogen - kein Spiel aufweist.

Zu den Anschlagstegen 14 benachbart weist das Blechteil 5 auf zwei gegenüberliegenden Seiten zwei nach oben abragende, stegformige und als Trägerabschnitte dienende Wandungsabschnitte auf, wobei der eine Wandungsabschnitt mit einem rechtwinklig nach außen abragenden Raststeg 11 und der andere Wandungsabschnitt mit einer elastisch nachgiebigen, stegförmigen Rastzunge 13 versehen ist. Die elastische Nachgiebigkeit der Rastzunge 13 wird durch eine entsprechende U-förmige Ausstanzung in dem Wandungsabschnitt erzielt. Die Rastzunge 13 ragt nach unten frei ab und ist an ihrem oberen Ende mit dem Wandungsabschnitt verbunden. Dieser obere Rand des Wandungsabschnittes ist durch einen rechtwinklig nach außen ragenden Verstärkungssteg 12 verstärkt, dessen freies Ende U-förmig umgebogen ist. Die Rastzunge 13 weist eine ebenfalls nach außen ragende Haltenase auf, die einstückig an der Rastzunge 13 angeformt ist. Die Haltenase ist stegartig ausgebildet. Im montierten Zustand hintergreift die Rastzunge 13 mit ihrer Haltenase einen oberen Rand der Aussparung 4 und der Raststeg 11 ist mit seiner Oberseite gegen den oberen Rand der gegenüberliegenden Aussparung 3 gedrückt. Die elastische Nachgiebigkeit der Rastzunge 13 gleicht Toleranzen aus, so daß die Gewindeplatte 6, 10 einschließlich der Haltezungen 15 des Käfigs 5 am Boden der Aufnahme 2 gehalten ist. Durch ein einfaches Lösen der Rastzunge 13 kann das Blechteil 5 einschließlich der Gewindeplatte 6, 10 wieder aus der Aufnahme 2 entfernt werden. Da die Gewindeplatte 6, 10 sich auf dem Boden der Aufnahme 2 abstützt und gleichzeitig auch die Rastverbindung durch den Raststeg 11, die Rastzunge 13 und die beiden Aussparungen 3, 4 jeweils eine formschlüssige Festlegung des Blechteils 5 in der Aufnahme 2 gewährleisten, ist die Gewindeplatte 6, 10 verliersicher in der Aufnahme 2 und damit an der Rohbaukarosserie 1 gehalten. Die radiale Verschiebbarkeit der Gewindeplatte 6, 10 innerhalb des Blechteils 5 und die gegenüber dem Gewindedurchzug 10 große Dimensionierung des Durchbruches 17 der Aufnahme 2 gewährleisten einen Toleranzausgleich bezüglich der Position des Lagers 7 der Hinterachse 8, so daß das Schraubelement 9 immer sicher im Gewindedurchzug 10 und damit an der Gewindeplatte 6, 10 festgelegt werden kann.

## Patentansprüche

1. Vorrichtung zur Festlegung eines Funktionsteiles (8) an einer Befestigungsstelle einer Rohbaukarosserie (1) eines Kraftfahrzeugs, die eine mit zwei Schraubteilen versehene Schraubverbindung aufweist, wobei ein rohbauseitiger Schraubteil (6) an der Befestigungsstelle der Rohbaukarosserie (1) und ein funktionsseitiger Schraubteil an dem Funktionsteil anordnet sind, wobei die Befestigungsstelle der Rohbaukarosserie als Aufnahme (2) gestaltet ist, die in einem Boden einen Durchbruch (17) für die Zusammenführung der Schraubteile aufweist, und wobei der rohbauseitige Schraubteil (6) von einem einstückigen Blechteil (5) gehalten ist, wobei das einstückige Blechteil zum Einsetzen in die Aufnahme (2) an die Abmessungen der Aufnahme angepasst ist und mittels einer Rastverbindung in der Aufnahme festlegbar ist,
**dadurch gekennzeichnet,**
**dass** der rohbauseitige Schraubteil (6) den Boden der Aufnahme (2) durchgreift und mit radialem Spiel zwischen der Aufnahme und dem einstückigen Blechteil (5) gehalten ist, wobei die Aufnahme und das einstückige Blechteil entgegengesetzten Seiten des rohbauseitigen Schraubteils (6) anliegen.

2. Vorrichtung nach Anspruch 1,
**dadurch gekennzeichnet,**
**dass** die Aufnahme (2) wenigstens zwei Raststellen (3, 4) in Wandungen aufweist und wenigstens zwei korrespondierende Rastelemente (11, 13) an korrespondierenden Trägerabschnitten des einstückigen Blechteils (5) vorgesehen sind.

3. Vorrichtung nach Anspruch 1 oder 2
**dadurch gekennzeichnet,**
**dass** die Raststellen Aussparungen (3, 4 ) in der Aufnahme (2) sind, wobei wenigstens ein die korrrespondierende Aussparung (4) durchgreifendes Rastelement (13) elastisch nachgiebig ausgebildet ist.

4. Vorrichtung nach Anspruch 3,
**dadurch gekennzeichnet,**
**dass** das Rastelement als Rastzunge (13) ausgebildet ist.

5. Vorrichtung nach wenigstens einem der vorhergehenden Ansprüche,
**dadurch gekennzeichnet,**
**dass** der rohbauseitige Schraubteil als mit einem Gewindedurchzug (10) versehene Gewindeplatte (6) gestaltet ist, die mit - auf die Schraubachse bezogen - radialem Spiel in dem einstückigen Blechteil (5) gehalten ist, wobei der Durchbruch (17) in der Aufnahme (2) in seiner Dimensionierung an das maximale radiale Spiel der Gewindeplatte (6, 10) angepasst ist.

6. Vorrichtung nach Anspruch 5,
**dadurch gekennzeichnet,**
**dass** der Gewindedurchzug (10) der Gewindeplatte (6) durch den Durchbruch (17) in der Aufnahme (2) hindurchragt.

7. Vorrichtung nach wenigstens einem der vorhergehenden Ansprüche,
**dadurch gekennzeichnet,**
**dass** das einstückige Blechteil Haltelaschen (15) zur Halterung der Gewindeplatte (6, 10) und als Rastelement dienende Raststege (11, 13) zur Festlegung des einstückigen Blechteils (5) in als korrespondierenden Raststellen dienenden Rastaussparungen (3, 4) der Aufnahme (2) aufweist.

8. Vorrichtung nach wenigstens einem der vorhergehenden Ansprüche,
**dadurch gekennzeichnet,**
**dass** die Aufnahme (2) einstückiger Teil der Rohbaukarosserie (1) ist.

9. Vorrichtung nach wenigstens einem der vorhergehenden Ansprüche,
**dadurch gekennzeichnet,**
**dass** das einstückige Blechteil (5) Anschlagzungen (14) zur Begrenzung der radialen Spielfreiheit der Gewindeplatte (6, 10) aufweist.

10. Vorrichtung nach wenigstens einem der vorhergehenden Ansprüche,
**dadurch gekennzeichnet,**
**dass** die Rastverbindung (3, 11, 4, 13) lösbar gestaltet ist.

11. Vorrichtung nach wenigstens einem der vorhergehenden Ansprüche,
**dadurch gekennzeichnet,**
**dass** die Aufnahme (2) in Wannenform oder als Teil eines U-förmigen Hohlträgers oder als Teil einer Konsole gestaltet ist.

## Claims

1. Device for fixing a functional component (8) to an attachment point on a body shell (1) of a motor vehicle, comprising a screw connection provided with two screw components such that one screw component (6) is positioned on the body shell side at an attachment point of the body shell (1) and one screw component is positioned on the functional side on the functional component, the attachment point of the body shell being made as a mounting (2) having in a bottom area an aperture (17) that allows the screw components to be brought together, and such that the screw component (6) on the body shell side is held by a one-piece sheet component (5), this one-piece sheet component being adapted to the dimensions of the mounting (2) to allow its insertion therein and being attachable to the mounting by a detent connection,
**characterised in that**
the screw component (6) on the body shell side passes through the bottom of the mounting (2) and is held with some radial freedom of movement between the mounting and the one-piece sheet component (5), such that the mounting and the one-piece sheet component are in contact with opposite sides of the screw component (6) on the body shell side.

2. Device according to Claim 1,
**characterised in that**
the mounting (2) has at least two detent points (3, 4) in its walls and at least two corresponding detent elements (11, 13) are provided on corresponding support sections of the one-piece sheet component (5).

3. Device according to Claims 1 or 2,
**characterised in that**
the detent points are cutouts (3, 4) in the mounting (2), and at least one detent element (13) that passes through the corresponding cutout (4) is made elastically compliant.

4. Device according to Claim 3,
**characterised in that**
the detent element is formed as a detent tab (13).

5. Device according to at least one of the preceding claims,
**characterised in that**
the screw component on the body shell side is made as a threaded plate (6) provided with a threaded passage (10), which is held in the one-piece sheet component (5) with some radial freedom of movement - relative to the screw axis - and the aperture (17) in the mounting (2) has dimensions adapted to the maximum radial freedom of movement of the threaded plate (6, 10).

6. Device according to Claim 5,
**characterised in that**
the threaded passage (10) of the threaded plate (6) projects through the aperture (17) in the mounting (2).

7. Device according to at least one of the preceding claims,
**characterised in that**
the one-piece sheet component has holding strips (15) for holding the threaded plate (6, 10) and detent webs (11, 13) that serve as detent elements for fixing the one-piece sheet component (5) in detent cutouts (3, 4) of the mounting (2) that serve as corresponding detent points.

8. Device according to at least one of the preceding claims,
**characterised in that**
the mounting (2) is formed as one piece with the body shell (1).

9. Device according to at least one of the preceding claims,
**characterised in that**
the one-piece sheet component (5) has stop-tabs (14) to limit the radial freedom of movement of the threaded plate (6).

10. Device according to at least one of the preceding claims,
**characterised in that**
the detent connection (3, 11, 4, 13) is designed to be releasable.

11. Device according to at least one of the preceding claims,
**characterised in that**
the mounting (2) is trough-shaped or is designed as part of a U-shaped hollow load-bearing member or as part of a console.

## Revendications

1. Dispositif pour la fixation d'une pièce fonctionnelle (8) sur un emplacement de fixation d'une carrosserie brute (1) d'un véhicule automobile, qui comprend une liaison vissée dotée de deux pièces à visser, sachant d'une pièce à visser (6) côté construction brute est disposée sur l'emplacement de fixation de la carrosserie brute (1) et qu'une pièce à visser côté pièce fonctionnelle est disposée sur la pièce fonctionnelle, sachant que l'emplacement de fixation de la carrosserie brute est configuré comme logement (2), qui comporte dans un fond une traversée (17) pour l'assemblage des pièces à visser, et sachant que la pièce à visser (6) côté construction brute est maintenue par une pièce en tôle (5) en une partie, sachant que la pièce en tôle en une partie est adaptée aux dimensions du logement pour l'introduction dans le logement (2) et peut être fixée dans le logement au moyen d'une liaison par encliquetage,
**caractérisé en ce que**
la pièce à visser (6) côté construction brute traverse le fond du logement (2) et est maintenue avec un jeu radial entre le logement et la pièce en tôle (5) en une partie, sachant que le logement et la pièce en tôle en une partie s'appliquent sur des faces opposées de la pièce à visser (6) côté construction brute.

2. Dispositif selon la revendication 1,
**caractérisé en ce que**
le logement (2) comporte au moins deux emplacements crantés (3, 4) dans des parois et **en ce qu'**au moins deux éléments d'arrêt (11, 13) correspondants sont prévus sur des sections porteuses correspondantes de la pièce en tôle (5) en une partie.

3. Dispositif selon la revendication 1 ou 2,
**caractérisé en ce que**
les emplacements crantés sont des évidements (3, 4) dans le logement (2), sachant qu'au moins un élément d'arrêt (13) venant en prise dans l'évidement (4) correspondant est configuré flexible.

4. Dispositif selon la revendication 3,
**caractérisé en ce que**
l'élément d'arrêt est configuré comme languette d'arrêt (13).

5. Dispositif selon l'une au moins des revendications précédentes,
**caractérisé en ce que**
la pièce à visser côté construction brute est configurée comme plaque taraudée (6) dotée d'une traversée taraudée (10) qui est maintenue avec jeu radial, rapporté à l'axe de la vis, dans la pièce en tôle (5) en une partie, sachant que la traversée (17) dans le logement (2) est adaptée dans son dimensionnement au jeu radial maximal de la plaque taraudée (6, 10).

6. Dispositif selon la revendication 5,
**caractérisé en ce que**
la traversée taraudée (10) de la plaque taraudée (6) dépasse dans le logement (2) à travers la traversée (17).

7. Dispositif selon l'une au moins des revendications précédentes,
**caractérisé en ce que**
la pièce en tôle en une partie comprend des pattes de maintien (15) pour maintenir la plaque taraudée (6, 1D) et des nervures d'arrêt (11, 13) servant d'élément d'arrêt pour la fixation de la pièce en tôle (5) en une partie dans des d'évidements de crantage (3, 4) du logement (2) servant d'emplacements de crantage correspondants.

8. Dispositif selon l'une au moins des revendications précédentes,
**caractérisé en ce que**
le logement (2) est une partie intégrante de la carrosserie brute (1).

9. Dispositif selon l'une au moins des revendications précédentes,
**caractérisé en ce que**
la pièce en tôle (5) en une partie comporte des languettes de butée (14) pour la limitation du jeu radial libre de la plaque taraudée (6, 10).

10. Dispositif selon l'une au moins des revendications précédentes,
**caractérisé en ce que**
l'assemblage encliqueté (3, 11, 4, 13) est configuré démontable.

11. Dispositif selon l'une au moins des revendications précédentes,
**caractérisé en ce que**
le logement (2) est configuré en forme de cuvette ou comme partie d'une poutre creuse en U ou comme partie d'une console.
